# EUROPEAN PATENT APPLICATION

(11) **EP 4 668 915 A1**
(43) Date of publication of application: **24.12.2025**
(21) Application number: 23922057.7
(22) Date of filing: 17.02.2023
(51) Int. Cl.: H04W 64/00, H04L 5/00

(54) **METHOD AND APPARATUS FOR SENDING SIDELINK POSITIONING REFERENCE SIGNAL (PRS)**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/076998
(87) International publication number: WO 2024/168926

(57) **Abstract**

Disclosed in the embodiments of the present disclosure are a method and apparatus for sending a sidelink positioning reference signal (SL PRS), which method and apparatus can be applied to a communication system. The method comprises: in an autonomous resource allocation mode, determining an SL PRS resource reservation period for sending a plurality of SL PRSs; determining an SL PRS sending resource group, wherein the SL PRS sending resource group comprises a plurality of SL PRS sending resources arranged at intervals by the SL PRS resource reservation period; and sending the plurality of SL PRSs by means of the SL PRS sending resource group. By means of the solution of the present disclosure, a terminal device can perform multi-SL PRS sending in an autonomous resource selection mode, such that the functionality of SL PRS transmission is enhanced, thereby improving the communication performance of an SL positioning service.

## Description

### TECHNICAL FIELD

The present disclosure relates to the field of communication technology, and in particular to a method and apparatus for sending a sidelink (SL) positioning reference signal (PRS).

### BACKGROUND

Terminal devices can communicate with each other via a sidelink (SL), for example, transmitting a sidelink positioning reference signal (SL PRS) for SL positioning. However, there is no consensus on how to send multiple SL PRSs in an autonomous resource selection mode.

### SUMMARY

Embodiments of the present disclosure provide a method and apparatus for sending a sidelink (SL) positioning reference signal (PRS), so that a terminal device can send multiple SL PRSs in an autonomous resource selection mode, thereby improving the communication performance of the SL positioning service.

In a first aspect, an embodiment of the present disclosure provides a method for sending a sidelink (SL) positioning reference signal (PRS), the method is performed by a first device, and includes: in an autonomous resource allocation mode, determining an SL PRS resource reservation period for sending a plurality of SL PRSs; determining an SL PRS sending resource group, where the SL PRS sending resource group includes a plurality of SL PRS sending resources at intervals of the SL PRS resource reservation period; and sending the plurality of SL PRSs through the SL PRS sending resource group.

In some embodiments, determining the SL PRS resource reservation period for sending the plurality of SL PRSs includes any one of: determining the SL PRS resource reservation period according to configuration information of a dedicated SL-PRS sending resource pool of the first device, where the configuration information of the dedicated SL-PRS sending resource pool carries configuration information of the SL PRS resource reservation period; determining the SL PRS resource reservation period according to configuration information of an SL data sending resource pool of the first device, where the configuration information of the SL data sending resource pool carries configuration information of the SL PRS resource reservation period, or the SL PRS resource reservation period is determined according to configuration information of an SL data resource reservation period for SL data transmission carried in the configuration information of the SL data sending resource pool; and determining that the SL PRS resource reservation period is an SL PRS sending period. Using the sending period of the SL PRS as the resource reservation period.

In some embodiments, determining the SL PRS resource reservation period for sending the plurality of SL PRSs includes: determining an SL PRS resource reservation period group based on configuration information of the SL PRS resource reservation period, where the SL PRS resource reservation period group includes multiple SL PRS resource reservation periods; and determining, from the SL PRS resource reservation period group, the SL PRS resource reservation period for sending the plurality of SL PRSs.

In some embodiments, the method further includes: in a case that the configuration information of the SL PRS resource reservation period is empty, or the first device is configured as being not allowed to send the plurality of SL PRSs, not sending the plurality of SL PRSs.

In some embodiments, the SL PRS resource reservation period is greater than or equal to a delay requirement or a remaining delay requirement of SL PRS transmission.

In some embodiments, the method further includes: determining a value of an SL PRS resource reselection counter; and determining whether to perform a resource reselection based on the value of the SL PRS resource reselection counter.

In some embodiments, determining the value of the SL PRS resource reselection counter includes any one of: determining the value of the SL PRS resource reselection counter according to configuration information of the SL PRS resource reselection counter sent by a network device; determining the value of the SL PRS resource reselection counter according to pre-configuration information of the first device; and selecting randomly the value of the SL PRS resource reselection counter.

In some embodiments, selecting randomly the value of the SL PRS resource reselection counter includes: determining a selection range according to a first parameter, a second parameter, and a third parameter, where the first parameter and the second parameter are positive integers greater than or equal to 1 and less than or equal to a first preset value, and the third parameter is a second preset value or a value that changes with the SL PRS resource reservation period; and selecting randomly the value of the SL PRS resource reselection counter from the selection range.

In some embodiments, the method further includes: determining the third parameter according to the SL PRS resource reservation period.

In some embodiments, determining the third parameter according to the SL PRS resource reservation period includes: in a case that the SL PRS resource reservation period is greater than or equal to a fourth parameter, determining that the third parameter is the second preset value, where the fourth parameter is a positive integer greater than or equal to 1 and less than or equal to a third preset value; in a case that the SL PRS resource reservation period is less than the fourth parameter, determining a maximum value between the SL PRS resource reservation period and a fifth parameter, and determining that the third parameter is a ratio between the fourth parameter and the maximum value, where the fifth parameter is a positive integer greater than or equal to 1 and less than or equal to the fourth parameter.

In some embodiments, the method further includes: determining at least one of the first parameter, the second parameter, the third parameter, the fourth parameter, or the fifth parameter based on any one of parameter configuration information sent by the network device, the pre-configuration information of the first device, and information agreed by a protocol.

In some embodiments, the first parameter, the second parameter, the third parameter, the fourth parameter, and the fifth parameter are parameters dedicated to SL PRS transmission or are parameters shared by SL PRS transmission and SL data transmission.

In some embodiments, determining whether to perform resource reselection based on the value of the SL PRS resource reselection counter includes: in a case that the value of the SL PRS resource reselection counter is 0, determining to perform the resource reselection.

In some embodiments, in a case that the value of the SL PRS resource reselection counter is 0, determining to perform resource reselection includes: in a case that the value of the SL PRS resource reselection counter is 1, selecting randomly a reference value within the range of [0,1]; in a case that the reference value is greater than a fourth preset value, and the value of the SL PRS resource reselection counter is 0, determining to perform the resource reselection.

In some embodiments, the method further includes: determining the fourth preset value according to parameter configuration information sent by the network device or pre-configuration information of the first device.

In some embodiments, the fourth preset value is a parameter dedicated to SL PRS transmission or a parameter shared by SL PRS transmission and SL data transmission.

In a second aspect, an embodiment of the present disclosure provides an apparatus for sending a sidelink (SL) positioning reference signal (PRS), wherein the apparatus is applied to a first device, and includes a transceiver module, which is configured to: after sending an SL PRS to a second device, retransmit the SL PRS based on or not based on the SL PRS feedback information of the second device.

In a third aspect, an embodiment of the present disclosure provides an apparatus for retransmitting a sidelink (SL) positioning reference signal (PRS), wherein the apparatus is applied to a second device and includes: a first determining module, configured to determine, in an autonomous resource allocation mode, an SL PRS resource reservation period for sending a plurality of SL PRSs; a second determining module, configured to determine an SL PRS sending resource group, where the SL PRS sending resource group includes a plurality of SL PRS sending resources at intervals of the SL PRS resource reservation period; and a sending module, configured to send multiple SL PRSs through the SL PRS sending resource group.

In a fourth aspect, an embodiment of the present disclosure provides a communication device, including: a transceiver; a memory; a processor, which is connected to the transceiver and the memory respectively, and is configured to, when executing computer executable instructions in the memory, control wireless signal reception and transmission of the transceiver, and implement the method described in the embodiment in the first aspect or the embodiment in the second aspect of the present disclosure.

In a fifth aspect, an embodiment of the present disclosure provides a computer-readable storage medium storing instructions, where the instructions, when executed, implement the method described in the embodiment in the first aspect or the embodiment in the second aspect of the present disclosure.

Embodiments of the present disclosure provide a method and apparatus for sending a sidelink (SL) positioning reference signal (PRS), a first device can determine, in an autonomous resource allocation mode, an SL PRS resource reservation period for sending a plurality of SL PRSs; the first device can determine an SL PRS sending resource group, the SL PRS sending resource group includes a plurality of SL PRS sending resources at intervals of the SL PRS resource reservation period; the first device can send the plurality of SL PRSs through the SL PRS sending resource group. The scheme of the present disclosure enables a terminal device to send multiple SL PRSs in an autonomous resource selection mode, thereby ensuring the functionality of the transmission and improving the communication performance of the SL positioning service.

### BRIEF DESCRIPTION OF THE DRAWINGS

In order to more clearly illustrate the technical solutions in the embodiments of the present disclosure or in the Background, the drawings required for illustrating the embodiments of the present disclosure or the Background will be described below.
Fig. 1 is a schematic diagram of the architecture of a communication system according to an embodiment of the present disclosure;
Fig. 2 is a flow chart of a method for sending an SL PRS according to an embodiment of the present disclosure;
Fig. 3 is a flow chart of a method for sending an SL PRS according to an embodiment of the present disclosure;
Fig. 4 is a flow chart of a method for sending an SL PRS according to an embodiment of the present disclosure;
Fig. 5 is a flow chart of a method for sending an SL PRS according to an embodiment of the present disclosure;
Fig. 6 is a flow chart of a method for sending an SL PRS according to an embodiment of the present disclosure;
Fig. 7 is a schematic diagram of an apparatus for sending an SL PRS according to an embodiment of the present disclosure;
Fig. 8 is a schematic structural diagram of a communication device according to an embodiment of the present disclosure;
Fig. 9 is a schematic structural diagram of a chip according to an embodiment of the present disclosure.

### DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. The embodiments described in the following exemplary embodiments do not represent all embodiments consistent with the present disclosure. Instead, they are merely examples of devices and methods consistent with some aspects of the present disclosure as detailed in the appended claims.

Terms used in the embodiments of the present disclosure are only for the purpose of describing specific embodiments and are not intended to limit the embodiments of the present disclosure. The singular forms of "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that, although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determining" for the purpose of brevity and ease of understanding, the terms used herein when characterizing the size relationship are "greater than" or "less than", "higher than" or "lower than". However, for those skilled in the art, it can be understood that the term "greater than" also covers the meaning of "greater than or equal to", and "less than" also covers the meaning of "less than or equal to"; the term "higher than" covers the meaning of "higher than or equal to", and "lower than" also covers the meaning of "lower than or equal to".

For ease of understanding, the terms involved in the present disclosure are first introduced.

Quality of Service (QoS) refers to the probability that a network meets a given service contract, or in many cases, the term is informally used to refer to the probability that a packet passes from one point to another point in the network. QoS is a control mechanism so that different priorities are used for different users or different data flows, or to ensure that the performance of data flows reaches a certain level according to the requirements of the application.

The positioning reference signal (PRS) is used for positioning measurements. The positioning device can perform positioning based on the measurement results.

In order to better understand the method for sending an SL PRS disclosed in an embodiment of the present disclosure, the communication system to which the embodiment of the present disclosure is applicable is first described below.

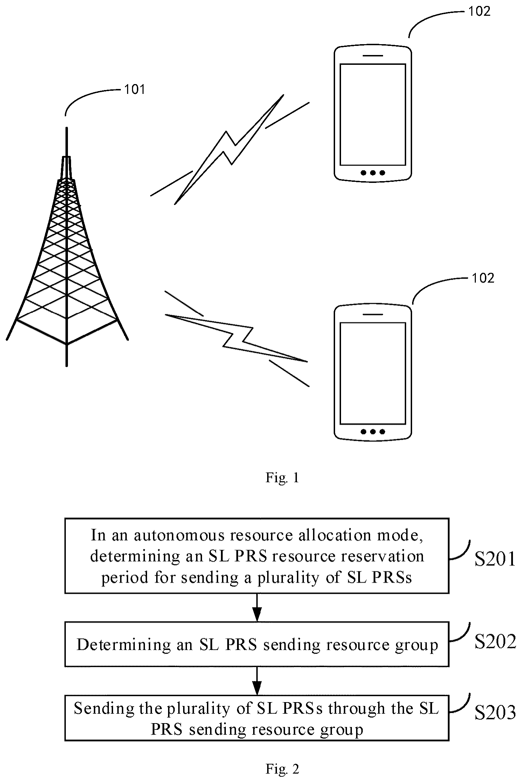

Please refer to Fig. 1, which is a schematic diagram of the architecture of a communication system according to an embodiment of the present disclosure. The communication system may include, but is not limited to, one network device and one terminal device. The quantity and form of devices shown in Fig. 1 are only used as examples and do not constitute a limitation on the embodiments of the present disclosure. In actual applications, two or more network devices and two or more terminal devices may be included. The communication system shown in Fig. 1 includes, for example, a network device 101 and a terminal device 102.

It should be noted that the technical solution of the embodiment of the present disclosure can be applied to various communication systems. For example: long term evolution (LTE) system, fifth generation (5G) mobile communication system, 5G new radio (NR) system, or other future new mobile communication systems. It should also be noted that the sidelink in the embodiment of the present disclosure can also be called SL.

The network device 101 in the embodiment of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiment of the present disclosure does not limit the specific technology and specific device form adopted by the network device. The network device provided in the embodiment of the present disclosure may be composed of a central unit (CU) and a distributed unit (DU), and the CU may also be referred to as a control unit. The CU-DU structure may be used to split the protocol layer of the network device, such as a base station, and the functions of some protocol layers are placed in the CU for centralized control, and the functions of a part or all of remaining protocol layers are distributed in the DU, and the DU is centrally controlled by the CU.

The terminal device 102 in the embodiment of the present disclosure is an entity on the user side for receiving or transmitting signals, such as a mobile phone. The terminal device may also be referred to as a terminal device (terminal), user equipment (UE), mobile station (MS), mobile terminal (MT), etc. The terminal device may be a car with communication function, a smart car, a mobile phone, a wearable device, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The embodiment of the present disclosure does not limit the specific technology and specific device form adopted by the terminal device.

In sidelink communication, there are four sidelink transmission modes, among which sidelink transmission mode 1 and sidelink transmission mode 2 are used for device-to-device (D2D) communication. Sidelink transmission mode 3 and sidelink transmission mode 4 are used for V2X communication. When sidelink transmission mode 3 is adopted, resource allocation is scheduled by the network device 101. Specifically, the network device 101 can send resource allocation information to the terminal device 102, and then the terminal device 102 allocates resources to another terminal device so that the other terminal device can send information to the network device 101 through the allocated resources. In V2X communication, a terminal device with better signal or higher reliability can be used as the terminal device 102. The first terminal device mentioned in the embodiment of the present disclosure may refer to the terminal device 102, and the second terminal device may refer to the other terminal device.

It can be understood that the communication system described in the embodiment of the present disclosure is for the purpose of more clearly illustrating the technical solution of the embodiment of the present disclosure, and does not constitute a limitation on the technical solution provided by the embodiment of the present disclosure. A person skilled in the art can know that with the evolution of the system architecture and the emergence of new business scenarios, the technical solution provided by the embodiment of the present disclosure is also applicable to similar technical problems.

The method provided by the present disclosure can be applied to SL positioning services or other services. SL positioning services include SL absolute positioning, SL relative positioning and ranging. Absolute positioning is to determine the absolute coordinates of the UE, relative positioning is to determine the coordinates of the UE relative to a reference point, and ranging is to determine the distance and/or angle of the UE relative to a reference point. Positioning methods include but are not limited to SL round trip time (RTT), SL time difference of arrival (TDOA), SL angle of arrival (AOA), SL carrier phase, etc., or a combination of the foregoing method with UU positioning (positioning based on the radio interface between UE and base station).

It should be noted that the method for sending the sidelink (SL) positioning reference signal (PRS) according to any embodiment of the present disclosure can be performed alone, or in combination with possible implementation methods in other embodiments, or in combination with any technical solution in the related art.

The following is a detailed introduction to the method and apparatus for sending the sidelink (SL) positioning reference signal (PRS) provided by the present disclosure in conjunction with the accompanying drawings.

Please refer to Fig. 2, which is a flow chart of a method for sending an SL PRS according to an embodiment of the present disclosure. The method is performed by a first device, as shown in Fig. 2, and includes but is not limited to the following steps S201 to S203.

S201, in an autonomous resource allocation mode, the first terminal determines an SL PRS resource reservation period for sending a plurality of SL PRSs.

Optionally, the first device may be one of a main positioning assistance UE, a positioning assistance UE and a to-be-positioned UE. Optionally, the positioning assistance UE may be of different types; for example, the positioning assistance UE may be a road side unit (RSU) type positioning assistance UE, which may provide positioning services by collaborating with other RSUs; for another example, the positioning assistance UE may be a normal UE. In some implementations, some positioning assistance UEs have location information such as GPS, which can assist other UEs in absolute positioning; some other positioning assistance UEs may not have location information such as GPS.

In some optional implementations, the first device may determine, in the autonomous resource allocation mode, an SL PRS resource reservation period for sending a plurality of SL PRSs. The SL PRS resource reservation period is a predefined sending period interval.

In some embodiments of the present disclosure, in a resource allocation mode based on autonomous selection, the first device may use the SL PRS resource reservation period to obtain multiple periodic time resources at intervals of a predefined sending period, thereby preparing reserved resources for subsequent multiple SL PRS transmissions. The configuration method of the SL PRS resource reservation period is not limited in the present disclosure, and an example is given below.

1) The SL PRS resource reservation period can be configured based on the SL PRS dedicated sending resource pool. For example, the method includes: determining the SL PRS resource reservation period according to configuration information of the dedicated SL-PRS sending resource pool of the first device.

In some implementations, the configuration information of the SL PRS dedicated sending resource pool carries configuration information of the SL PRS resource reservation period, and the first device can determine the configuration information of the SL PRS resource reservation period based on the SL PRS dedicated sending resource pool.

2) The SL PRS resource reservation period can be configured based on a shared resource pool, the shared resource pool refers to a resource pool shared by SL PRS sending resources and SL data sending resources, that is, the SL PRS is transmitted using resources in the SL data sending resource pool.

For example, the first device may determine the configuration information of the SL PRS resource reservation period based on the configuration information of the SL data sending resource pool of the first device, where the configuration information of the SL data sending resource pool carries the configuration information of the SL PRS resource reservation period.

In other words, the configuration information of the SL data sending resource pool of the first device includes configuration information about the SL PRS resource reservation period, and the first device can configure the SL PRS resource reservation period based on the configuration information. That is, the configuration information of the SL PRS resource reservation period can be added into the configuration information of the SL data sending resource pool, that is, the resource reservation period is configured separately for the SL PRS in the SL data sending resource pool.

For another example, the SL PRS resource reservation period is determined based on configuration information of an SL data resource reservation period for SL data transmission carried in the configuration information of the SL data sending resource pool. That is, the SL PRS resource reservation period can be determined according to configuration information of an SL data resource reservation period for SL data transmission in the configuration information of the SL data sending resource pool, that is to say, the sending of SL PRS and the sending of SL data share a resource reservation period, and there is no need to configure the resource reservation period for the sending of SL PRS separately.

In other words, the configuration information of the SL data sending resource pool of the first device includes a resource reservation period configuration for SL data transmission, and the first device can use the resource reservation period configuration as the resource reservation period configuration for SL PRS.

In some optional implementations, when the first device is not configured with a resource reservation period, the first device may also determine the sending period of the SL PRS as the resource reservation period, that is, the first device may perform resource reservation period configuration for SL PRS according to the sending period configuration of the SL PRS.

In some optional implementations, the resource reservation period is greater than or equal to a delay requirement or a remaining delay requirement. That is, the resource reservation period selected by the first device should not be less than the delay requirement of the SL-PRS transmission of the first device or remaining delay requirement. Of course, the resource reservation period may also have other restrictions, and this disclosure does not impose any special restrictions on this.

S202: the first device determines an SL PRS sending resource group.

In some implementations, the first device may determine the SL PRS sending resource group in a variety of ways, thereby reserving resources for subsequent multiple SL PRS transmissions.

Specifically, the determined SL PRS sending resource group may satisfy specific conditions to meet the demand for transmission resources. For example, the first device may determine the SL PRS sending resource group based on the SL PRS resource reservation period for sending multiple SL PRSs, that is, the first device may determine the SL PRS sending resource group so that the SL PRS sending resource group includes a plurality of SL PRS sending resources at intervals of the determined SL PRS resource reservation period.

In some optional embodiments, the SL PRS sending resource group includes a plurality of SL PRS sending resources at intervals of an SL PRS resource reservation period. For example, when performing SL PRS transmission, the first device may randomly selects a time-frequency resource for an SL PRS transmission occasion, and based on the time-frequency resource, selects a group of time-frequency resources at intervals of the resource reservation period for subsequent transmission of multiple SL PRSs. Of course, it is possible that the first device can select the time-frequency resources for sending the SL PRSs according to other rules, and the present disclosure does not limit this.

S203: the first device sends the plurality of SL PRSs through the SL PRS sending resource group.

In some embodiments of the present disclosure, when the first device is in the autonomous resource allocation mode, the first device obtains the SL PRS sending resource group according to the SL PRS resource reservation period, and after obtaining the SL PRS sending resource group, the first device can use the reserved SL PRS sending resource group to periodically transmit multiple SL PRSs. The reserved SL PRS sending resource group may include at least two or more resources, and these resources may be spaced apart according to the resource reservation period. The present disclosure does not limit the specific number of resources included in the reserved SL PRS sending resource group.

In the embodiment of the present disclosure, the first device can determine the SL PRS resource reservation period for sending a plurality of SL PRSs in an autonomous resource allocation mode, and accordingly determine the SL PRS sending resource group, thereby sending the plurality of SL PRSs through the SL PRS sending resource group. This is beneficial to enhancing the functionality of SL PRS transmission, thereby improving the communication performance of the SL positioning service.

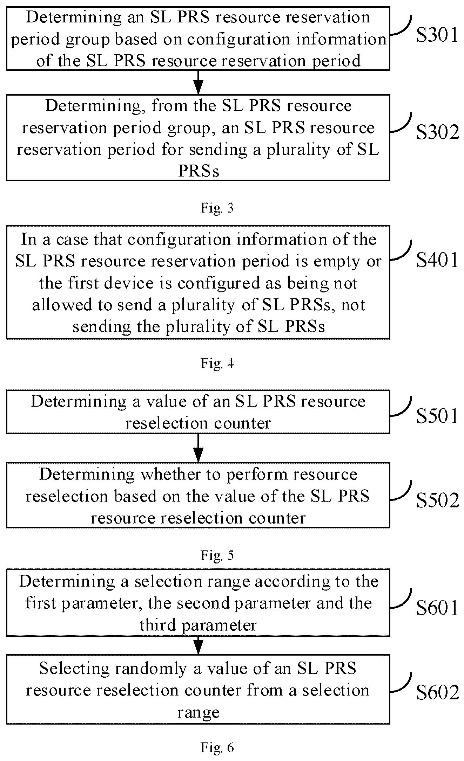

Please refer to Fig. 3, which is a flow chart of a method for sending an SL PRS according to an embodiment of the present disclosure. The sending of the SL PRS is performed by the first device. The embodiment shown in Fig. 3 is a further explanation of step S201 in the embodiment described in Fig. 2. The method includes but is not limited to the following steps S301 and S302.

S301: the first device determines an SL PRS resource reservation period group based on configuration information of the SL PRS resource reservation period.

It should be understood that there are multiple methods for determining the SL PRS resource reservation period group. For example, the SL PRS resource reservation period group may be determined based on configuration information of the SL PRS resource reservation period.

In the embodiments of the present disclosure, the term "SL PRS resource reservation period" may encompass varied predefined quantities, e.g., an SL PRS resource reservation period may refer to one SL PRS resource reservation period, or a group of SL PRS resource reservation periods, namely, an SL PRS resource reservation period group. The PRS resource reservation period may be pre-configured for the first device, or may be obtained by the first device from the network side device as needed, which is not limited in the present disclosure.

In an optional manner, the SL PRS resource reservation period configured by the first device may be one allowed SL PRS resource reservation period. For example, the first device determines the SL PRS sending resource group according to a configured SL PRS resource reservation period, and sends multiple SL PRSs through the SL PRS sending resource group. In another optional manner, the SL PRS resource reservation period configured by the first device may be a group of allowed SL PRS resource reservation periods, for example, the first device determines the SL PRS sending resource group according to a configured group of SL PRS resource reservation periods, that is, an SL PRS resource reservation period group including multiple SL PRS resource reservation periods, and sends multiple SL PRSs through the SL PRS sending resource group.

Optionally, the SL PRS resource reservation period group may include two SL PRS resource reservation periods, or may include more than two SL PRS resource reservation periods, which is not limited in the present disclosure.

S302: the first device determines, from the SL PRS resource reservation period group, an SL PRS resource reservation period for sending a plurality of SL PRSs.

In an embodiment of the present disclosure, when the SL PRS resource reservation period configured by the first device is a group of allowed SL PRS resource reservation periods, that is, an SL PRS resource reservation period group, the first device can determine, from the SL PRS resource reservation period group, the SL PRS resource reservation period for sending a plurality of SL PRSs.

For example, the first device may select, according to a specific rule, a certain SL PRS resource reservation period from the SL PRS resource reservation period group as the SL PRS resource reservation period. The specific rule may be a random rule or other predefined rule, which is not limited in the present disclosure.

In an embodiment of the present disclosure, the first device can determine the SL PRS resource reservation period for sending a plurality of SL PRSs in an autonomous resource allocation mode and determine the SL PRS sending resource group, thereby sending a plurality of SL PRSs through the SL PRS sending resource group, which is beneficial to enhancing the functionality of SL PRS transmission and thus improving the communication performance of the SL positioning service.

Please refer to Fig. 4, which is a flow chart of a method for sending an SL PRS according to an embodiment of the present disclosure. The method is performed by a first device, and the embodiment shown in Fig. 4 further describes a scheme for the first device to send multiple SL PRSs in an autonomous resource allocation mode. The method may include but is not limited to the following step:
S401: in a case that configuration information of the SL PRS resource reservation period is empty or the first device is configured as being not allowed to send a plurality of SL PRSs, not sending the plurality of SL PRSs.

When the first device determines the SL PRS resource reservation period group based on the configuration information of the SL PRS resource reservation period, the first device can determine the content of the configuration information to determine whether to send multiple SL PRSs. In an embodiment of the present disclosure, the first device sends multiple SL PRSs according to the configuration information of the SL PRS resource reservation period.

In an embodiment of the present disclosure, when the first device determines that the configuration information of the SL PRS resource reservation period is empty, the first device will give up sending a plurality of SL PRSs.

In an embodiment of the present disclosure, the first device may determine whether it is allowed to send multiple SL PRSs. When the first device is configured as being not allowed to send a plurality of SL PRSs, the first device will not send the plurality of SL PRSs.

For example, the first device may determine whether it is allowed to send multiple SL PRSs according to the protocol agreement. For another example, the first device may determine whether it is allowed to send multiple SL PRSs according to the pre-configuration information of the first device. For another example, the first device may determine whether it is allowed to send multiple SL PRSs according to the instructions of the network device or other terminal devices.

That is, when the configuration information of the SL PRS resource reservation period is empty, the first device will not determine the SL PRS sending resource group according to the SL PRS resource reservation period, and thus will not send multiple SL PRSs. When the first device is configured as be not allowed to send a plurality of SL PRSs, the first device will not determine the SL PRS sending resource group according to the SL PRS resource reservation period, but will give up sending the plurality of SL PRSs.

In other words, only when the configuration information of the SL PRS resource reservation period of the first device is not empty, and the first device is not configured as be not allowed to send a plurality of SL PRSs, the first device will determine the SL PRS sending resource group according to the SL PRS resource reservation period, thereby sending a plurality of SL PRSs.

In the embodiment of the present disclosure, the first device will choose whether to send multiple SL PRSs according to different configuration situations, which is conducive to enhancing the functionality of SL PRS transmission and thus improving the communication performance of the SL positioning service.

Please refer to Fig. 5, which is a flow chart of the method for sending an SL PRS according to an embodiment of the present disclosure. The method is performed by a first device. The embodiment shown in Fig. 5 further describes a resource reselection scheme for the first device to send multiple SL PRS in an autonomous resource allocation mode. Optionally, the resource reselection can be performed before the sending multiple SL PRS as described in the above embodiment, that is, determining the time-frequency resources for sending multiple SL PRS; or the resource reselection can be performed after sending multiple SL PRS, that is, determining the time-frequency resources for sending multiple SL PRS next time. The present disclosure does not limit the execution timing of the resource reselection. The method may include but is not limited to the following steps S501 and S502.

S501: the first device determines a value of an SL PRS resource reselection counter.

In the embodiment of the present disclosure, when the first device sends multiple SL PRS, the first device can determine the value of an SL PRS resource reselection counter and determines whether to perform resource reselection based on the value of the counter.

In some optional implementations, the first device may determine the value of the SL PRS resource reselection counter in the following manner.
1) the value of the SL PRS resource reselection counter is determined based on network device configuration.
   For example, the first device determines the value of the SL PRS resource reselection counter according to the configuration information of the SL PRS resource reselection counter sent by the network device, that is, the first device can configure the value of the SL PRS resource reselection counter according to the configuration information of the SL PRS resource reselection counter sent by the network.
2) the value of the SL PRS resource reselection counter is determined according to the pre-configuration of the first device.
   For example, the first device determines the value of the SL PRS resource reselection counter according to the pre-configuration information of the first device, that is, the first device can configure the value of the SL PRS resource reselection counter according to the configuration information predefined by the first device.
3) the value of the SL PRS resource reselection counter is selected randomly.

For example, the first device may select randomly a value of the SL PRS resource reselection counter, that is, the first device may configure the value of the SL PRS resource reselection counter by using a random selection method.

S502: the first device determines whether to perform resource reselection based on the value of the SL PRS resource reselection counter.

In some optional implementations, the first device determines whether to perform resource reselection based on the value of the SL PRS resource reselection counter, that is, if the value of the SL PRS resource reselection counter reaches a certain threshold, the first device will perform resource reselection.

Optionally, when the value of the SL PRS resource reselection counter is 0, it is determined to perform the resource reselection, that is, when the value of the SL PRS resource reselection counter is 0, the first device will reselect the SL PRS resource.

Optionally, when the value of the SL PRS resource reselection counter is 1, the first device randomly selects a reference value in the range of [0, 1], and in a case that the reference value is greater than a fourth preset value, when the value of the SL PRS resource reselection counter is 0, the first device determines to perform resource reselection. The fourth preset value is a parameter dedicated to SL PRS transmission or a parameter shared by SL PRS transmission and SL data transmission.

For example, when the value of the SL PRS resource reselection counter is 1, the first device randomly selects a value in the range of [0, 1]. If the value is greater than the fourth preset value X, when the value of the SL PRS resource reselection counter is 0, the first device clears the selected SL PRS sending resources and performs reselection of SL PRS sending resources.

Optionally, when determining the fourth preset value, the first device may determine the fourth preset value according to parameter configuration information sent by the network device or pre-configuration information of the first device.

In an embodiment of the present disclosure, when sending a plurality of SL PRSs, the first device will determine whether to perform resource reselection based on the value of the SL PRS resource reselection counter, which is beneficial to enhancing the functionality of SL PRS transmission and thus improving the communication performance of the SL positioning service.

Please refer to Fig. 6, which is a flow chart of a method for sending an SL PRS according to an embodiment of the present disclosure. The method is performed by a first device, and the embodiment shown in Fig. 6 further describes a scheme for the first device to send multiple SL PRSs in an autonomous resource allocation mode. When the value of the SL PRS resource reselection counter is determined in step S501, when the first device selects the value of the SL PRS resource reselection counter in a random selection manner, the method may include but is not limited to the following steps S601 and S602.

S601: the first device determines a selection range according to the first parameter, the second parameter and the third parameter.

Optionally, the first parameter and the second parameter are positive integers greater than or equal to 1 and less than or equal to a first preset value, and the third parameter is a second preset value or a value that changes with the SL PRS resource reservation period.

Optionally, the first device may determine the third parameter according to the SL PRS resource reservation period. Specifically, when the SL PRS resource reservation period is greater than or equal to the fourth parameter, the third parameter is determined to be the second preset value, where the fourth parameter is a positive integer greater than or equal to 1 and less than or equal to a third preset value; when the SL PRS resource reservation period is less than the fourth parameter, the maximum value of the SL PRS resource reservation period and the fifth parameter is determined, and the ratio between the fourth parameter and the maximum value is determined to be the third parameter, where the fifth parameter is a positive integer greater than or equal to 1 and less than or equal to the fourth parameter.

In some optional implementations, the first device may determine at least one of the first parameter, the second parameter, the third parameter, the fourth parameter, or the fifth parameter according to any one of parameter configuration information sent by the network device, the pre-configuration information of the first device, and information agreed by a protocol. The first parameter, the second parameter, the third parameter, the fourth parameter, and the fifth parameter are parameters dedicated to SL PRS transmission or parameters shared by SL PRS transmission and SL data transmission.

For example, if the UE selects randomly by itself, the UE may select randomly an integer value within the range of [first parameter*third parameter, second parameter*third parameter].

S602: the first device selects randomly a value of an SL PRS resource reselection counter from a selection range.

For example, when the first preset value is 10000, the first parameter a and the second parameter b can take values in the range of 1 to 10000. When the second preset value is 1, the third parameter c can take a value of 1 or can be selected based on the size of the resource reservation period, i.e., if the resource reservation period is greater than or equal to the fourth preset value X ms, c is 1, otherwise c takes a value of X/max (fifth parameter value d, resource reservation period), i.e., the maximum value between d and the resource reservation period is determined, and c takes a value of the ratio of X to the maximum value. The value of X can be less than the third preset value 1000000, and the fifth parameter d can be a positive integer from 1 to X. For example, if a is 100, b is 500, and c is 1, the UE can select randomly a value in the range of [100, 500] as the value of the resource reselection counter. For another example, if a is 100, b is 500, X is 100ms, the resource reservation period is 50ms, and d is 20, then c is 100/max(50, 20) = 2. The UE can select randomly a value in the range of [200, 1000] as the value of the resource reselection counter.

In an embodiment of the present disclosure, the first device will select the value of the SL PRS resource reselection counter in a random selection manner to determine whether to perform resource reselection when sending a plurality of SL PRSs, which is beneficial to enhancing the functionality of SL PRS transmission and thus improving the communication performance of the SL positioning service.

In the above embodiments provided by the present disclosure, the method performed by the first device is introduced. In order to implement the functions in the methods provided by the above embodiments of the present disclosure, the first device may include a hardware structure and a software module, and implement the above functions in the form of a hardware structure, a software module, or a hardware structure plus a software module. One of the above functions may be performed in the form of a hardware structure, a software module, or a hardware structure plus a software module.

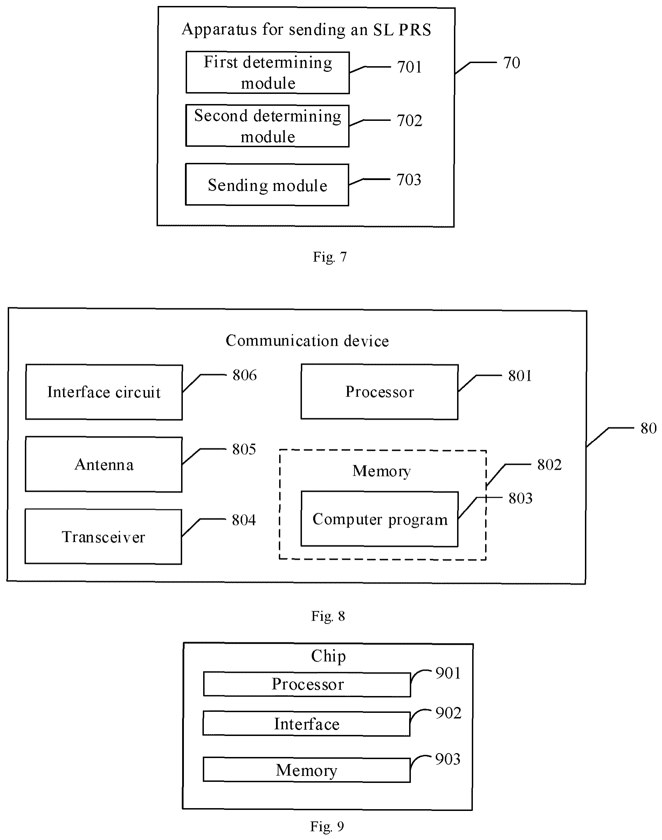

Please refer to Fig. 7, which is a schematic structural diagram of an apparatus 70 for sending an SL PRS according to an embodiment of the present disclosure. The apparatus 70 for sending an SL PRS shown in Fig. 7 is applied to a first device and may include:
a first determining module 701, configured to determine an SL PRS resource reservation period for sending a plurality of SL PRSs in an autonomous resource allocation mode;
a second determining module 702, configured to determine an SL PRS sending resource group, where the SL PRS sending resource group includes a plurality of SL PRS sending resources at intervals of an SL PRS resource reservation period; and
a sending module 703, configured to send the plurality of SL PRSs via the SL PRS sending resource group.

Optionally, when determining the SL PRS resource reservation period for sending a plurality of SL PRSs, the first determining module 701 is further configured to determine the SL PRS resource reservation period according to the configuration information of the dedicated SL-PRS sending resource pool of the first device, where the configuration information of the dedicated SL-PRS sending resource pool carries configuration information of the SL PRS resource reservation period; determine the SL PRS resource reservation period according to the configuration information of the SL data sending resource pool of the first device, where the configuration information of the SL data sending resource pool carries configuration information of the SL PRS resource reservation period; or the SL PRS resource reservation period is determined according to the configuration information of the SL data resource reservation period for SL data sending carried in the configuration information of the SL data sending resource pool; and determine that the SL PRS resource reservation period is an SL PRS sending period.

Optionally, when determining the SL PRS resource reservation period for sending a plurality of SL PRSs, the first determining module 701 is further configured to determine the SL PRS resource reservation period group based on the configuration information of the SL PRS resource reservation period, where the SL PRS resource reservation period group includes multiple SL PRS resource reservation periods; and determine, from the SL PRS resource reservation period group, the SL PRS resource reservation period for sending a plurality of SL PRSs.

Optionally, when the configuration information of the SL PRS resource reservation period is empty, or the first device is configured as being not allowed to send a plurality of SL PRSs, not sending the plurality of SL PRSs.

Optionally, the resource reservation period is greater than or equal to a delay requirement or a remaining delay requirement of SL PRS transmission.

Optionally, the second determining module 702 is further configured to determine the value of an SL PRS resource reselection counter; and determine whether to perform resource reselection based on the value of the SL PRS resource reselection counter.

Optionally, when determining the value of the SL PRS resource reselection counter, the second determining module 702 is further configured to determine the value of the SL PRS resource reselection counter according to the configuration information of the SL PRS resource reselection counter sent by the network device; determine the value of the SL PRS resource reselection counter according to the pre-configuration information of the first device; and select randomly the value of the SL PRS resource reselection counter.

Optionally, when selecting randomly the value of the SL PRS resource reselection counter, the second determining module 702 is further configured to determine the selection range based on the first parameter, the second parameter and the third parameter, where the first parameter and the second parameter are positive integers greater than or equal to 1 and less than or equal to the first preset value, and the third parameter is the second preset value or a value that changes with the SL PRS resource reservation period; and select randomly the value of the SL PRS resource reselection counter from the selection range.

Optionally, the second determining module 702 is further configured to determine a third parameter according to the SL PRS resource reservation period.

Optionally, when determining the third parameter according to the SL PRS resource reservation period, the second determining module 702 is further configured to, when the SL PRS resource reservation period is greater than or equal to the fourth parameter, determine that the third parameter is the second preset value, where the fourth parameter is a positive integer greater than or equal to 1 and less than or equal to a third preset value; when the SL PRS resource reservation period is less than the fourth parameter, determine a maximum value between the SL PRS resource reservation period and a fifth parameter, and determine that the third parameter is a ratio between the fourth parameter and the maximum value, where the fifth parameter is a positive integer greater than or equal to 1 and less than or equal to the fourth parameter.

Optionally, the second determining module 702 is further configured to determine at least one of the first parameter, the second parameter, the third parameter, the fourth parameter, or the fifth parameter according to any one of parameter configuration information sent by the network device, the pre-configuration information of the first device, and information agreed by a protocol.

Optionally, the first parameter, the second parameter, the third parameter, the fourth parameter, and the fifth parameter are parameters dedicated to SL PRS transmission or are parameters shared by SL PRS transmission and SL data transmission.

Optionally, when determining whether to perform resource reselection based on the value of the SL PRS resource reselection counter, the second determining module 702 is further configured to determine to perform the resource reselection when the value of the SL PRS resource reselection counter is 0.

Optionally, when determining to perform the resource reselection when the value of the SL PRS resource reselection counter is 0, the second determining module 702 is further configured to select randomly a reference value in the range of [0, 1] when the value of the SL PRS resource reselection counter is 1; when the reference value is greater than a fourth preset value, and the value of the SL PRS resource reselection counter is 0, determine to perform the resource reselection.

Optionally, the second determining module 702 is further configured to determine the fourth preset value according to parameter configuration information sent by the network device or pre-configuration information of the first device.

Optionally, the fourth preset value is a parameter dedicated to SL PRS transmission or a parameter shared by SL PRS transmission and SL data transmission.

Please refer to Fig. 8, which is another schematic structural diagram of a communication device 80 according to an embodiment of the present disclosure. The communication device 80 can be a network device, or a terminal device, or a chip, chip system or processor that supports the network device to implement the above method, or a chip, chip system, or processor that supports the terminal device to imple ment the above method. The device can be used to implement the method described in the above method embodiment, and the details can be referred to the description in the above method embodiment.

The communication device 80 may include one or more processors 801. The processor 801 may be a general-purpose processor or a dedicated processor, etc. For example, it may be a baseband processor or a central processing unit. The baseband processor may be used to process the communication protocol and communication data, and the central processing unit may be used to control the communication device (such as a base station, a baseband chip, a terminal device, a terminal device chip, a DU or a CU), execute a computer program, and process the data of the computer program.

Optionally, the communication device 80 may further include one or more memories 802, on which a computer program 803 may be stored, and the processor 801 executes the computer program 803, so that the communication device 80 performs the method described in the above method embodiments. Optionally, data may also be stored in the memory 802. The communication device 80 and the memory 802 may be provided separately or integrated together.

Optionally, the communication device 80 may further include a transceiver 804 and an antenna 805. The transceiver 804 may be referred to as a transceiver unit, a transceiver, or a transceiver circuit, etc., and is used to implement a transceiver function. The transceiver 804 may include a receiver and a transmitter, the receiver may be referred to as a receiver or a receiving circuit, etc., and is used to implement a receiving function; the transmitter may be referred to as a transmitter or a transmitting circuit, etc., and is used to implement a transmitting function.

Optionally, the communication device 80 may further include one or more interface circuits 806. The interface circuit 806 is used to receive code instructions and send them to the processor 801. The processor 801 runs the code instructions to enable the communication device 80 to perform the method described in the above method embodiments.

The communication device 80 is a terminal device used to implement the functions of the terminal device in the aforementioned embodiments.

The communication device 80 is a network device used to implement the functions of the network device in the aforementioned embodiments.

In one implementation, the processor 801 may include a transceiver for implementing receiving and sending functions. For example, the transceiver may be a transceiver circuit, an interface, or an interface circuit. The transceiver circuit, interface, or interface circuit for implementing the receiving and sending functions may be separate or integrated. The above-mentioned transceiver circuit, interface, or interface circuit may be used for reading and writing code/data, or the above-mentioned transceiver circuit, interface, or interface circuit may be used for transmitting or delivering signals.

In one implementation, the processor 801 may store a computer program 803, which runs on the processor 801 and enables the communication device 80 to perform the method described in the above method embodiments. The computer program 803 may be firmware in the processor 801, in which case the processor 801 may be implemented by hardware.

In one implementation, the communication device 80 may include a circuit that can implement the functions of sending or receiving or communicating in the aforementioned method embodiments. The processor and transceiver described in the present disclosure can be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver can also be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs).

The communication device described in the above embodiments may be a network device or terminal device, but the scope of the communication device described in the present disclosure is not limited thereto, and the structure of the communication device may not be limited by Fig. 8. The communication device may be an independent device or may be part of a larger device. For example, the communication device may be:
(1) An independent integrated circuit (IC), or chip, or chip system or subsystem;
(2) A collection of one or more ICs, optionally including a storage component for storing data or computer programs;
(3) ASIC, such as modem;
(4) Modules that can be embedded in other devices;
(5) Receivers, terminal devices, intelligent terminal devices, cellular phones, wireless devices, handheld devices, mobile units, vehicle-mounted devices, network devices, cloud devices, artificial intelligence devices, etc.;
(6) and the like.

For the case where the communication device is a chip or a chip system, please refer to the schematic diagram of the chip structure shown in Fig. 9. The chip shown in Fig. 9 includes a processor 901 and an interface 902. There may be one or more processors 901, and there may be multiple interfaces 902.

For the case where the chip is used to implement the function of the first device in the embodiment of the present disclosure:
the processor 901 is configured to determine priority information of SL PRS transmission; and
the interface 902 is configured to perform the SL PRS transmission with the second device according to the priority information of the SL PRS transmission.

Optionally, the processor 901 is further configured to determine the priority of the SL PRS transmission according to the priority information of the SL PRS transmission; and perform the SL PRS transmission with the second device according to the priority of the SL PRS transmission.

Optionally, the interface 902 is further configured to determine the priority of the UL transmission when there is a transmission collision between the SL PRS transmission and the uplink UL transmission of the first device; determine a first priority relationship between the SL PRS transmission and the UL transmission according to the priority of the SL PRS transmission and the priority of the UL transmission; and perform the SL PRS transmission with the second device according to the first priority relationship.

Optionally, when the SL PRS transmission and the UL transmission cannot be performed simultaneously, the interface 902 is also configured to perform the SL PRS transmission with the second device if the priority of the SL PRS transmission is higher than the priority of the UL transmission; or perform the UL transmission with other second device if the priority of the SL PRS transmission is lower than the priority of the UL transmission.

Optionally, when the SL PRS transmission and the UL transmission can be carried out simultaneously but there is an overlap in time, the interface 902 is also configured to when the priority of the SL PRS transmission is higher than the priority of the UL transmission, perform the SL PRS transmission with the second device; or, when the priority of the SL PRS transmission is lower than the priority of the UL transmission, perform the UL transmission with other second device.

Optionally, when the total transmission power of the first device required during the overlapping period of the SL PRS transmission and the UL transmission is greater than a power threshold, the interface 902 is further configured to maintain the transmission power of the SL PRS transmission and reduce the transmission power of the UL transmission when the priority of the SL PRS transmission is higher than the priority of the UL transmission, so as to limit the total transmission power to be less than or equal to the power threshold; or, when the priority of the SL PRS transmission is lower than the priority of the UL transmission, maintain the transmission power of the UL transmission and reduce the transmission power of the SL PRS transmission to limit the total transmission power to be less than or equal to the power threshold.

Optionally, the first device performs a first transmission in a first network, and/or performs a second transmission in a second network, wherein at least one of the first transmission and the second transmission is the SL PRS transmission, and the interface 902 is further configured to determine a second priority relationship between the first transmission and the second transmission according to the priority of the SL PRS transmission; determine a high-priority transmission corresponding to the first transmission and the second transmission according to the second priority relationship, and perform the high-priority transmission.

Optionally, the processor 901 is further configured to determine start times of the first transmission and the second transmission, and determine an earliest start time therefrom;

Optionally, the interface 902 is further configured to select a higher priority transmission from the first transmission and the second transmission for transmission based on the determined priorities of the first transmission and the second transmission when the priorities of the first transmission and the second transmission are determined before the earliest start time.

Optionally, the UL transmission includes one of the following preset uplink transmissions: transmission of a physical random access channel (PRACH); transmission and retransmission of a physical uplink shared channel (PUSCH) scheduled by an uplink grant in a random access response (RAR); transmission and retransmission of a PUSCH corresponding to a type 2 random access; a physical uplink control channel (PUCCH) carrying a hybrid automatic repeat request acknowledgement (HARQ-ACK) of an RAR or SL; a PUCCH carrying downlink control information (DCI) scrambled with a temporary cell radio network temporary identifier (TC-RNTI).

Optionally, the UL transmission further includes other UL transmissions except the preset uplink transmission types, and the processor 901 is further configured to determine, according to a priority threshold, a third priority relationship between the SL PRS transmission and the other UL transmissions.

Optionally, the processor 901 is further configured to, when the priority value is negatively correlated with the priority level, if the transmission priority of the SL PRS is lower than the priority threshold, determine that the transmission priority of the SL PRS is higher than the other UL transmissions; or, if the transmission priority of the SL PRS is higher than the priority threshold, determine that the transmission priority of the SL PRS is lower than the other UL transmissions;

In the case where the priority value is positively correlated with the priority level, if the transmission priority of the SL PRS is higher than the priority threshold, determine that the transmission priority of the SL PRS is higher than the other UL transmissions; or, if the transmission priority of the SL PRS is lower than the priority threshold, determine that the transmission priority of the SL PRS is lower than the other UL transmissions.

Optionally, other UL transmissions are PUSCH or PUCCH corresponding to non-priority specified indexes; or, other UL transmissions are PUSCH or PUCCH corresponding to the priority specified index, and the priority threshold is the SL priority threshold of the uplink ultra-reliable low-latency communication (UL-URLLC) service.

Optionally, the interface 902 is further configured to receive priority information of the SL PRS transmission sent by a third device, wherein the third device is at least one of the second device, a positioning assistance device, or a network device; or,
optionally, the processor 901 is further configured to determine priority information of the SL PRS transmission according to quality of service (QoS) information of a SL positioning service corresponding to the SL PRS transmission.

Optionally, the interface 902 is further configured to receive the priority information of the SL PRS transmission and the priority information of the SL PRS reception sent by the third device; or,
optionally, the processor 901 is further configured to determine, according to the QoS information, the priority information of the SL PRS transmission and the priority information of the SL PRS reception.

Optionally, the priority information of the SL PRS transmission includes at least one of the following information: the priority value and/or value range of the SL PRS transmission; the identification information (ID) of the SL PRS or the SL PRS set ID; the QoS information of the SL positioning service corresponding to the SL PRS; the priority information of each SL PRS ID or the priority information of each SL PRS set ID; the priority information of the SL PRS transmission and the priority information of the SL PRS reception.

Optionally, the SL PRS transmission includes SL PRS transmission and SL PRS reception, and the processor 901 is further configured to determine at least one of a priority of the SL PRS transmission and a priority of the SL PRS reception.

Optionally, when the third device is the second device, the interface 902 is further configured to perform signaling interaction with the second device through one of SL LPP message, SL interface PC5 -S message, RRC message and SCI, wherein the signaling interaction at least includes sending of priority information of the SL PRS transmission.

Optionally, when the third device is a positioning assistance device, the interface 902 is further configured to perform signaling interaction with the positioning assistance device through LPP messages, wherein the signaling interaction at least includes sending of priority information of the SL PRS transmission.

Optionally, when the third device is a network device, the interface 902 is further configured to perform signaling interaction with the network device through one of a system broadcast message, an RRC reconfiguration message, an RRC release message, downlink control information (DCI) and a media access control-control element (MAC CE) message, wherein the signaling interaction at least includes sending of priority information of the SL PRS transmission.

Optionally, the chip further includes a memory 903, and the memory 903 is used to store necessary computer programs and data.

In the embodiment of the present disclosure, priority information is set for SL PRS transmission, and SL PRS transmission is performed based on the priority information, so that SL PRS transmission is more accurate, which is conducive to improving the rationality of SL PRS transmission. Furthermore, when there is a transmission collision between SL PRS transmission and UL transmission, the transmission collision can be resolved based on the priority relationship between the two transmissions, that is, the risk of collision between SL PRS transmission and UL transmission is reduced. Moreover, it can be ensured that a transmission with a higher priority among the SL PRS transmission or the UL transmission is transmitted, which can reduce the packet loss.

Those skilled in the art may also understand that the various illustrative logical blocks and steps listed in the embodiments of the present disclosure may be implemented by electronic hardware, computer software, or a combination of hardware and software. Whether such functions are implemented by hardware or software depends on the specific application and the design requirements of the entire system. Those skilled in the art may use various methods to implement the functions described for each specific application, but such implementation should not be understood as exceeding the scope of protection of the embodiments of the present disclosure.

An embodiment of the present disclosure also provides a communication system, which includes the communication device as a terminal device and the communication device as a network device in the embodiment of Fig. 8 above, or the system includes the communication device as a terminal device and the communication device as a network device in the embodiment of Fig. 9 above.

The present disclosure also provides a readable storage medium having instructions stored thereon, which, when executed by a computer, implement the functions of any of the above method embodiments.

The present disclosure also provides a computer program product, which, when executed by a computer, implements the functions of any of the above method embodiments.

The above embodiments can be implemented in whole or in part by software, hardware, firmware or any combination thereof. When implemented by software, it can be implemented in whole or in part in the form of a computer program product. The computer program product includes one or more computer programs. When the computer program is loaded and executed on a computer, the process or function described in the embodiment of the present disclosure is generated in whole or in part. The computer can be a general-purpose computer, a special-purpose computer, a computer network, or other programmable device. The co mputer program can be stored in a computer-readable storage medium, or transmitted from one computer-readable storage medium to another computer-readable storage medium. For example, the computer program can be transmitted from a website site, computer, server or data center by wired (e.g., coaxial cable, optical fiber, digital subscriber line (DSL)) or wireless (e.g., infrared, wireless, microwave, etc.) mode to another website site, computer, server or data center. The computer-readable storage medium can be any available medium that can be accessed by a computer or a data storage device such as a server or data center integrated with one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)).

Those skilled in the art can understand that, the various numerical numbers such as first and second involved in the present disclosure are only used for distinction for convenience of description and are not used to limit the scope of the embodiments of the present disclosure, and also do not indicate the order of precedence.

At least one in the present disclosure may also be described as one or more, and a plurality may be two, three, four or more, which is not limited in the present disclosure. In the embodiments of the present disclosure, for a technical feature, the technical features in a kind of technical feature are distinguished by "first", "second", "third", "A", "B", "C" and "D", etc., and there is no order of precedence or size between the technical features described by the "first", "second", "third", "A", "B", "C" and "D".

The corresponding relationship shown in the tables of the present disclosure can be configured or predefined. The values of the information in each table are only examples and can be configured as other values, which are not limited by the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adaptions can be made based on the above tables, such as splitting, merging, etc. The names of the parameters shown in the titles of the above tables can also be replaced with other names that can be understood by the communication device, and the values or representations of the parameters can also be other values or representations that can be understood by the communication device. When implementing the above tables, other data structures can also be used, such as arrays, queues, containers, stacks, linear lists, pointers, linked lists, trees, graphs, structures, classes, heaps, or hash tables.

The predefinition in the present disclosure may be understood as defined, predefined, stored, pre-stored, pre-negotiated, pre-configured, implemented as firmware, or pre-burned.

Those of ordinary skill in the art will appreciate that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Those skilled in the art can use different methods to implement the described functions for each specific application, but such implementation should not be considered as falling outside the scope of this disclosure.

Those skilled in the art can clearly understand that, for the convenience and brevity of description, for the specific working processes of the systems, devices and units described above, reference may be made to the corresponding processes in the aforementioned method embodiments, and a description thereof will not be repeated here.

The above is only specific implementations of the present disclosure, but the scope of the present disclosure is not limited thereto. Any person skilled in the art who is familiar with the technical field can easily think of changes or substitutions within the technical scope disclosed in the present disclosure, which should be included in the scope of the present disclosure. Therefore, the scope of the present disclosure should be based on the scope of the claims.

## Claims

1. A method for sending a sidelink positioning reference signal (SL PRS), wherein the method is performed by a first device, and comprises:
in an autonomous resource allocation mode, determining an SL PRS resource reservation period for sending a plurality of SL PRSs;
determining an SL PRS sending resource group, wherein the SL PRS sending resource group comprises a plurality of SL PRS sending resources at intervals of the SL PRS resource reservation period; and
sending the plurality of SL PRSs through the SL PRS sending resource group.

2. The method according to claim 1, wherein the determining the SL PRS resource reservation period for sending the plurality of SL PRSs comprises any one of:
determining the SL PRS resource reservation period according to configuration information of a dedicated SL-PRS sending resource pool of the first device, wherein the configuration information of the dedicated SL-PRS sending resource pool carries configuration information of the SL PRS resource reservation period;
determining the SL PRS resource reservation period according to configuration information of an SL data sending resource pool of the first device, wherein the configuration information of the SL data sending resource pool carries the configuration information of the SL PRS resource reservation period, or the SL PRS resource reservation period is determined according to configuration information of an SL data resource reservation period for SL data transmission carried in the configuration information of the SL data sending resource pool; and
determining that the SL PRS resource reservation period is an SL PRS sending period.

3. The method according to claim 1 or 2, wherein the determining the SL PRS resource reservation period for sending the plurality of SL PRSs comprises:
determining an SL PRS resource reservation period group based on configuration information of the SL PRS resource reservation period, wherein the SL PRS resource reservation period group comprises a plurality of SL PRS resource reservation periods; and
determining, from the SL PRS resource reservation period group, the SL PRS resource reservation period for sending the plurality of SL PRSs.

4. The method according to any one of claims 1 to 3, further comprising:
in a case that configuration information of the SL PRS resource reservation period is empty or the first device is configured as being not allowed to send the plurality of SL PRSs, not sending the plurality of SL PRSs.

5. The method according to any one of claims 1 to 4, wherein the SL PRS resource reservation period is greater than or equal to a delay requirement or a remaining delay requirement of SL PRS transmission.

6. The method according to any one of claims 1 to 5, further comprising:
determining a value of an SL PRS resource reselection counter; and
determining whether to perform a resource reselection based on the value of the SL PRS resource reselection counter.

7. The method according to claim 6, wherein the determining the value of the SL PRS resource reselection counter comprises any one of:
determining the value of the SL PRS resource reselection counter according to configuration information of the SL PRS resource reselection counter sent by a network device;
determining the value of the SL PRS resource reselection counter according to pre-configuration information of the first device; and
selecting randomly the value of the SL PRS resource reselection counter.

8. The method according to claim 7, wherein the selecting randomly the value of the SL PRS resource reselection counter comprises:
determining a selection range according to a first parameter, a second parameter, and a third parameter, wherein the first parameter and the second parameter are positive integers greater than or equal to 1 and less than or equal to a first preset value, and the third parameter is a second preset value or a value that changes with the SL PRS resource reservation period; and
selecting randomly the value of the SL PRS resource reselection counter from the selection range.

9. The method according to claim 8, further comprising:
determining the third parameter according to the SL PRS resource reservation period.

10. The method according to claim 9, wherein the determining the third parameter according to the SL PRS resource reservation period comprises:
in a case that the SL PRS resource reservation period is greater than or equal to a fourth parameter, determining that the third parameter is the second preset value, wherein the fourth parameter is a positive integer greater than or equal to 1 and less than or equal to a third preset value;
in a case that the SL PRS resource reservation period is less than the fourth parameter, determining a maximum value between the SL PRS resource reservation period and a fifth parameter, and determining that the third parameter is a ratio between the fourth parameter and the maximum value, wherein the fifth parameter is a positive integer greater than or equal to 1 and less than or equal to the fourth parameter.

11. The method according to claim 10, further comprising:
determining at least one of the first parameter, the second parameter, the third parameter, the fourth parameter, or the fifth parameter according to any one of parameter configuration information sent by the network device, the pre-configuration information of the first device, and information agreed by a protocol.

12. The method according to claim 10 or 11, wherein the first parameter, the second parameter, the third parameter, the fourth parameter and the fifth parameter are parameters dedicated to SL PRS transmission or are parameters shared by SL PRS transmission and SL data transmission.

13. The method according to any one of claims 6 to 12, wherein the determining whether to perform the resource reselection based on the value of the SL PRS resource reselection counter comprises:
in a case that the value of the SL PRS resource reselection counter is 0, determining to perform the resource reselection.

14. The method according to claim 13, wherein in the case that the value of the SL PRS resource reselection counter is 0, determining to perform the resource reselection comprises:
in a case that the value of the SL PRS resource reselection counter is 1, selecting randomly a reference value in the range of [0, 1]; and
in a case that the reference value is greater than a fourth preset value, and the value of the SL PRS resource reselection counter is 0, determining to perform the resource reselection.

15. The method according to claim 14, further comprising:
determining the fourth preset value according to parameter configuration information sent by a network device or pre-configuration information of the first device.

16. The method according to claim 14 or 15, wherein the fourth preset value is a parameter dedicated to SL PRS transmission or a parameter shared by SL PRS transmission and SL data transmission.

17. An apparatus for sending a sidelink (SL) positioning reference signal (PRS), wherein the apparatus is applied to a first device and comprises:
a first determining module, configured to determine, in an autonomous resource allocation mode, an SL PRS resource reservation period for sending a plurality of SL PRSs;
a second determining module, configured to determine an SL PRS sending resource group, wherein the SL PRS sending resource group comprises a plurality of SL PRS sending resources at intervals of the SL PRS resource reservation period; and
a sending module, configured to send the plurality of SL PRSs through the SL PRS sending resource group.

18. A communication device, comprising: a transceiver; a memory; and a processor, wherein the processor is connected to the transceiver and the memory respectively, and configured to, when executing computer executable instructions in the memory, control wireless signal reception and transmission of the transceiver, and implement the method according to any one of claims 1 to 16.

19. A computer-readable storage medium storing instructions, wherein the instructions, when executed, implement the method according to any one of claims 1 to 16.
